# EUROPÄISCHE PATENTSCHRIFT

(11) **EP 0 848 672 B1**
(45) Veröffentlichungstag und Bekanntmachung des Hinweises auf die Patenterteilung: **15.12.1999**
(21) Anmeldenummer: 95928882.0
(22) Anmeldetag: 05.09.1995
(51) Int. Cl.: B60K 7/00, B60K 17/04, B60K 17/14

(54) **ANTRIEB FÜR EIN EINZELRAD**
DRIVE FOR A SINGLE WHEEL
MECANISME D'ENTRAINEMENT POUR UNE SEULE ROUE

(43) Veröffentlichungstag der Anmeldung: 24.06.1998
(73) Patentinhaber: Elin EBG Traction GmbH, 1141 Wien (AT)
(72) Erfinder: PROKSCH, Franz, A-2361 Laxenburg (AT)
(74) Vertreter: Rieberer, Stefan, Dipl.-Ing.
(86) Internationale Anmeldenummer: AT9500175
(87) Internationale Veröffentlichungsnummer: WO9709192

(56) Entgegenhaltungen:
- DE-U- 9 208 118
- FR-A- 2 507 550
- GB-A- 2 055 338
- GB-A- 2 105 665
- GB-A- 2 260 108
- US-A- 3 770 074

## Beschreibung

Die Erfindung betrifft einen Antrieb für ein Einzelrad eines mittels Elektromotor betriebenen Fahrzeuges, insbesondere eines öffentlichen Verkehrsmittels, wobei zwischen dem senkrecht angeordneten Elektromotor und dem Einzelrad ein Getriebe vorgesehen ist, welches in einem Getriebekasten angeordnet und mit einer Druckölschmierung ausgerüstet ist, wobei die Motorwelle und die Achse des Getrieberitzels fluchtend ausgerichtet sind und das Getrieberitzel direkt auf einer Verlängerung der Motorwelle angeordnet ist, welche in nur einem einzigen gemeinsamen Lager gelagen ist, welches in einem Lagerschild integriert angeordnet ist, der zwischen Getriebe und Elektromotor angeordnet und an der zum Getriebe weisenden Seite des Motorgehäuses vorgesehen ist, und wobei dieser Lagerschild mit einem Getriebeflansch, welcher an der zum Elektromotor weisenden Seite des Getriebekastens vorgesehen ist, mechanisch verbunden ist.

Eine derartiger Antrieb ist aus der FR 2 507 550 A bekannt.

Die immer höher werdenden Belastungen durch den Individualverkehr, besonders in den Ballungsgebieten, fordern geeignete Maßnahmen im Bereich des öffentlichen Verkehrs. Europaweit wird der Ausbau des öffentlichen Verkehrs, insbesondere des Straßenbahnnetzes im städtischen Bereich, angestrebt. Aber nicht nur ein dichteres Verkehrsnetz, sondern auch eine benutzerfreundliche Gestaltung der Straßenbahnen soll die Akzeptanz dieses Verkehrsmittels wesentlich erhöhen. Die benutzerfreundliche Ausgestaltung soll besonders älteren und behinderten Menschen, Müttern mit Kinderwagen bzw. Kleinkindern, Fahrradfahrern und Reisenden mit Gepäck entgegenkommen.

Die Fußbodenhöhe der konventionellen Straßenbahn liegt bei etwa einem Meter über dem Straßenniveau. Um der oben beschriebenen Personengruppe das problemlose Benutzen der Straßenbahn zu erleichtern, begann man mit der Entwicklung der Niederstflur-Straßenbahn.

Das Entwicklungskonzept der Niederstflur-Straßenbahn sieht einen durchgehend ebenen Wagenboden in einer Höhe von etwa 20 cm über dem Straßenniveau vor, was besondere Lösungen im Bereich des Antriebes erfordert. Um einen ebenen Wagenboden zu erreichen, muß der Bereich unter dem Wagenboden frei bleiben.

Eine Lösung für das Antriebsproblem sieht einen senkrecht stehenden Elektromotor, welcher über eine elastische Kupplung und ein Achswinkelgetriebe das Rad antreibt, vor. Der Nachteil dieser Anordnung besteht darin, daß sowohl die Kupplung als auch die beiden Lager für Motor und Getrieberitzel relativ viel Platz benötigen.

Der Erfindung liegt somit die Aufgabe zugrunde, einen Antrieb zu schaffen, der besonders platzsparend ausgeführt ist, unter besonderer Berücksichtigung der hohen Anforderungen an die Sicherheit, die dem Betrieb von öffentlichen Verkehrsmitteln zugrunde liegt. Eine wirtschaftliche Herstellung und Servicefreundlichkeit sind weitere Aufgabenstellungen an die Erfindung.

Die Aufgabe wird durch die Erfindung gelöst. Dieser Antrieb für ein Einzelrad ist erfindungsgemäß dadurch gekennzeichnet, daß zwischen Lager und Elektromotor eine berührungsfreie Dichtung, vorzugsweise eine Spaltringdichtung, im Lagerschild integriert angeordnet ist.

Mit der Erfindung ist es möglich, einen besonders platzsparenden Antrieb zu schaffen. Durch die Einsparung eines zusätzlichen Lagers ist eine wesentliche Gewichtseinsparung erzielbar. Dies hat eine Reduktion des Massenträgheitsmomentes zur Folge, sowie wesentliche Vorteile bei der Wartung.

Erfindungsgemäß ist vorgesehen, daß das Getrieberitzel direkt auf einer Verlängerung der Motorwelle angeordnet ist, und daß das Lagerschild, welches an der zum Getriebe weisenden Seite des Motorgehäuses vorgesehen ist, mit einem Getriebeflansch, welcher an der zum Elektromotor weisenden Seite des Getriebekastens vorgesehen ist, mechanisch, vorzugsweise mittels Schraubverbindungen, verbunden ist.

Auch hier ist der Vorteil der Gewichtseinsparung ersichtlich, da eine aufwendige elastische Kupplung zwischen Getriebe und Elektromotor entfällt. Ein weiterer Vorteil besteht in der wirtschaftlicheren Herstellung und Prüfung der Antriebseinheit. Bei der Herstellung wird der die Welle des Elektromotors mit dem Ritzel versehen. Die Getriebeprüfung, die getrennt von der Motorprüfung erfolgt, wird so durchgeführt, daß an Stelle des Ritzels ein Prüfritzel eingesetzt wird. Danach werden Motor und Getriebe zu einer Antriebseinheit zusammengeflanscht.

Vorteilhaft bei der erfindungsgemäßen Ausgestaltung ist, daß durch die Anordnung der Spaltringdichtung zwischen Elektromotor und Lager über ein wartungsfreies Element die Abdichtung des Lagerschmieröles gegenüber dem Elektromotor erfolgt.

Gemäß einem weiteren Merkmal der Erfindung ist im Lagerschild eine Schmierölbohrung vorgesehen, die einerseits zwischen Lager und Dichtung endet und anderseits über einen Hohlleiter, vorzugsweise ein Rohr, mit der Druckölschmierung verbunden ist, und ist im Lagerschild mindestens eine Ableitbohrung vorgesehen, die einerseits im Bereich der Dichtung endet und anderseits mit dem Getriebekasten verbunden ist.

Der Vorteil dieser Weiterbildung besteht darin, daß durch die Einbeziehung der Druckölschmierung des Getriebes eine Minimierung der Bauteile sowie ein geringerer Aufwand bei der Wartung erzielbar ist. Über die Ableitbohrung wird überschüssiges Schmieröl im Lagerbereich in den Getriebekasten abgeleitet und der Druckölschmierung zugeführt.

In der Folge wird die Erfindung anhand eines in der Fig. dargestellten Ausführungsbeispieles näher erläutert.

Der in der Fig. dargestellte Antrieb für ein Einzelrad weist einen senkrecht stehenden Elektromotor 10 auf, dessen Motorwelle 11 rechtwinklig zur Radachse 2 angeordnet ist. Zwischen Elektromotor 10 und Rad 1 ist ein Achswinkelgetriebe 3 angeordnet, wobei das Getrieberitzel 7 direkt auf einer Verlängerung der Motorwelle 9 aufsitzt. Der Getriebekasten 4 ist motorseitig mit einem Getriebeflansch 6 ausgerüstet. Ein Lagerschild 14 ist als Gegenstück zum Getriebeflansch 6 vorgesehen, wobei im Lagerschild 14 ein Lager 13 und motorseitig eine Dichtung 15 integriert angeordnet ist. Das Lagerschild 14 ist mit einer Schmierölbohrung 16 versehen, welche einerseits zwischen Lager 13 und Dichtung 15 einmündet und anderseits mit der Druckölschmierung 5 über ein Rohr 17 verbunden ist. Im Bereich der Dichtung 15 sind Ableitbohrungen 18 vorgesehen, welche das überflüssige Schmieröl in den Getriebekasten 4 leiten.

Wie in der Fig. ersichtlich ist, wurde hier eine besonders platzsparende Antriebseinheit geschaffen. Durch Einsparung von einem Lager und einer elastischen Kupplung, die in konventionellen Anordnungen üblichen sind, ist eine wesentliche Gewichtseinsparung erzielbar. Die Anordnung des Ritzels auf einer Verlängerung der Motorwelle und die Einbeziehung der Druckölschmierung zur Lagerschmierung bringt eine wesentliche Vereinfachung bei Herstellung, Prüfung und im Service sowie eine Minimierung an Bauteilen.

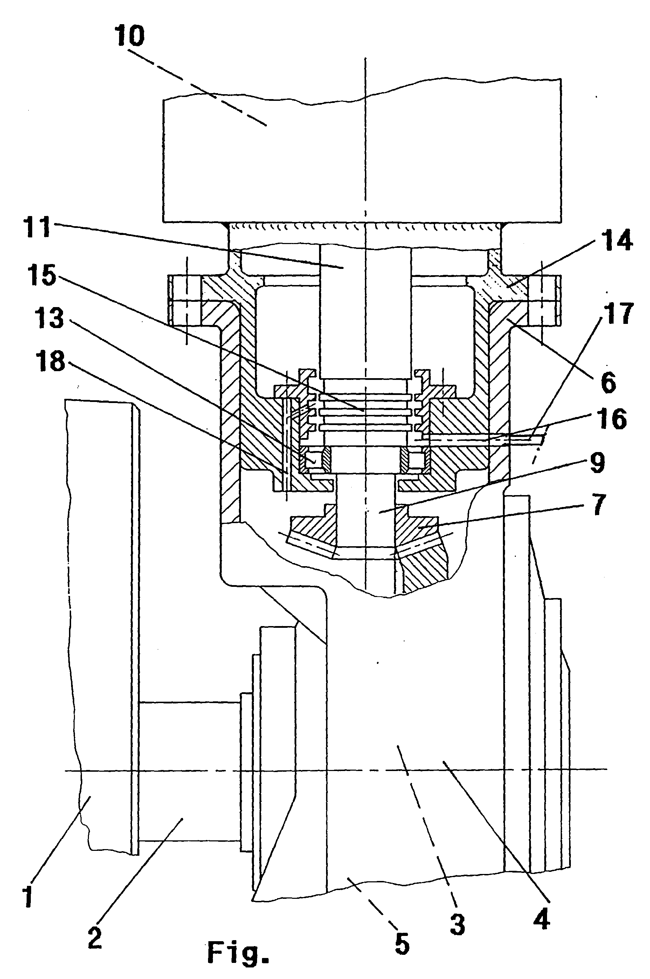

## Patentansprüche

1. Antrieb für ein Einzelrad eines mittels Elektromotor (10) betriebenen Fahrzeuges, insbesondere eines öffentlichen Verkehrsmittels, wobei zwischen dem senkrecht angeordneten Elektromotor (10) und dem Einzelrad ein Getriebe (3) vorgesehen ist, welches in einem Getriebekasten (4) angeordnet und mit einer Druckölschmierung (5) ausgerüstet ist, wobei die Motorwelle (11) und die Achse des Getrieberitzels (7) fluchtend ausgerichtet sind und das Getrieberitzel (7) direkt auf einer Verlängerung (9) der Motorwelle (11) angeordnet ist, welche in nur einem einzigen gemeinsamen Lager (13) gelagert ist, welches in einem Lagerschild (14) integriert angeordnet ist, der zwischen Getriebe (3) und Elektromotor (10) angeordnet und an der zum Getriebe (3) weisenden Seite des Motorgehäuses vorgesehen ist, und wobei dieser Lagerschild (14) mit einem Getriebeflansch (6), welcher an der zum Elektromotor (10) weisenden Seite des Getriebekastens (4) vorgesehen ist, mechanisch verbunden ist, **dadurch gekennzeichnet, daß** zwischen Lager (13) und Elektromotor (10) eine berührungsfreie Dichtung (15), vorzugsweise eine Spaltringdichtung, im Lagerschild (14) integriert angeordnet ist.

2. Antrieb für ein Einzelrad nach Anspruch 1, **gekennzeichnet dadurch**, daß im Lagerschild (14) eine Schmierölbohrung (16) vorgesehen ist, die einerseits zwischen Lager (13) und Dichtung (15) endet und anderseits über einen Hohlleiter (17), vorzugsweise ein Rohr, mit der Druckölschmierung (5) verbunden ist, und daß im Lagerschild (14) mindestens eine Ableitbohrung (18) vorgesehen ist, die einerseits im Bereich der Dichtung (15) endet und anderseits mit dem Getriebekasten (4) verbunden ist.

## Claims

1. Drive for a single wheel of a vehicle driven by an electric motor (10), particularly for public conveyance, wherein gear means (3) are provided between the vertically arranged electric motor (10) and said single wheel, said gear means being located within a gear box (4) and equipped with pressure oil lubrication means (5), wherein the motor shaft (11) and the axle of the gear pinion (7) are aligned, and said gear pinion (7) is arranged directly on an extension (9) of the motor shaft (11) that is supported only by a single common bearing (13) integrated in a bearing bracket (14) which is situated between the gear (3) and the electric motor (10) and is provided at that side of the motor housing which faces said gear means (3), said bearing bracket (14) being mechanically connected to a gear flange (6) arranged at that side of the gear box (4) which faces said electric motor (10), **characterised in that** a contact-less sealing (15), preferably a gap ring sealing, is integrated in said bearing bracket (14) between said bearing (13) and said electric motor (10) .

2. Drive for a single wheel according to claim 1, **characterised in that** in said bearing bracket (14) a lubricating oil bore (16) is provided which ends, on the one hand, between said bearing (13) and said sealing (15), and is connected, on the other hand, to the pressure oil lubrication means (5) through a hollow conduit (17), preferably a pipe, and that in said bearing bracket (14) at least one draining bore (18) is provided which ends within the region of said sealing (15), on the one hand, and is connected to said gear box (4) on the other hand.

## Revendications

1. Dispositif d'entraînement pour une seule roue d'un véhicule propulsé au moyen d'un moteur électrique (10), en particulier de moyens de transport public, où, entre le moteur électrique (10) disposé verticalement et la roue unique est prévue une transmission (3) qui est disposée dans un boîtier de transmission (4) et équipée d'un dispositif de lubrification par huile sous pression (5), l'arbre moteur (11) et l'axe du pignon de transmission (7) étant en alignement et le pignon de transmission (7) étant disposé directement sur un prolongement (9) de l'arbre moteur (11), qui est monté dans un seul palier (13) commun unique, qui est disposé de façon intégrée dans un flasque de palier (14) situé entre la transmission (3) et le moteur électrique (10) et est prévu sur le côté, tourné vers la transmission (3), du carter moteur, et ce flasque de palier (14) étant relié mécaniquement à une bride de transmission (6) prévue sur la face, tournée vers le moteur électrique (10), du boîtier de transmission (4), caractérisé en ce que, entre le palier (13) et le moteur électrique (10) est disposé, de façon intégrée dans le flasque de palier (14), un joint d'étanchéité (15) sans contact de préférence un joint d'étanchéité à bagues et à interstices.

2. Entraînement pour une seule roue selon la revendication 1, caractérisé en ce que dans le flasque de palier (14) est prévu un perçage d'huile de lubrification (16) qui, d'une part, s'achève entre le palier (13) et le joint d'étanchéité (15) et, d'autre part, est relié par un conducteur creux (17), de préférence un tube, au dispositif de lubrification par huile sous pression (5), et en ce que dans le flasque de palier (14) est prévu au moins un perçage d'évacuation (18), d'une part, s'achevant dans la zone du joint d'étanchéité (15) et, d'autre part, relié au boîtier de transmission (4).
